**Europäisches Patentamt**

**European Patent Office**

**Office européen des brevets**

(19)

(11) Veröffentlichungsnummer: **0 153 659 B1**

(12) ## EUROPÄISCHE PATENTSCHRIFT

(45) Veröffentlichungstag der Patentschrift: **13.11.91**

(51) Int. Cl.⁵: **C08B** 3/06, B01D 15/08

(21) Anmeldenummer: **85101549.5**

(22) Anmeldetag: **13.02.85**

Die Akte enthält technische Angaben, die nach dem Eingang der Anmeldung eingereicht wurden und die nicht in dieser Patentschrift enthalten sind.

(54) **Verfahren zur Herstellung von mikrokristalliner Triacetylcellulose.**

(30) Priorität: **01.03.84 DE 3407596**

(43) Veröffentlichungstag der Anmeldung:
**04.09.85 Patentblatt 85/36**

(45) Bekanntmachung des Hinweises auf die Patenterteilung:
**13.11.91 Patentblatt 91/46**

(84) Benannte Vertragsstaaten:
**BE CH DE FR GB LI NL SE**

(56) Entgegenhaltungen:
**GB-A- 396 309**

**CHEMISCHE BERICHTE, Band 107, 1974, Seiten 175-182; F. EFFENBERGER et al.: "Über die sauer katalysierte Acylierung von Phenolen"**

**LIEBIGS ANNALEN DER CHEMIE, 1976, Seiten 996-1008; G. HESSE et al.: "Die chromatographische Racemattrennung"**

**Chromatographia, 9, 62 (1976)**

**Chromatographia, 6, 277 (1973)**

**Houben-Weyl, Band XIV/2, 874-875 (1963)**

**Chemical Abstracts, 99 (23) Seite 705, Nummer 194404x**

(73) Patentinhaber: **MERCK PATENT GESELLSCHAFT MIT BESCHRÄNKTER HAFTUNG
Frankfurter Strasse 250 Postfach 4119
W-6100 Darmstadt(DE)**

(72) Erfinder: **Seitz, Georg, Dr.
Mozartweg 55
W-6100 Darmstadt(DE)**
Erfinder: **Wernicke, Rainer, Dr.
Am Forsthaus 21
W-6078 Neu Isenburg 2(DE)**

Rank Xerox (UK) Business Services

## Beschreibung

Die Erfindung betrifft ein neues Verfahren Zur Herstellung von mikrokristalliner Triacetylcellulose.

Es besteht ein wachsender Bedarf an mikrokristalliner Triacetylcellulose, das vornehmlich als chromatographisches Sorbens Verwendung findet. Besonders geeignet ist dieses Material für chromatographische Racematspaltungen wobei für eine Vielzahl von chiralen Verbindungen die weitgehende oder vollständige Trennung der Racemformen in die entsprechenden Enantiomeren durch Chromatographie an mikrokristalliner Triacetylcellulose möglich ist.

Mikrokristalline Triacetylcellulose konnte bisher nach einem Verfahren hergestellt werden, daß von G. Hesse und R. Hagel (Chromatographia 6, 277 (1973), Chromatographia 9, 62 (1976), Liebigs Annalen der Chemie 996 (1976)) beschrieben worden ist. In diesem Verfahren wird mikrokristalline Cellulose bei schonenden Bedingungen mit Essigsäure und Acetanhydrid in Gegenwart einer unabdingbaren Menge von Perchlorsäure als Katalysator acetyliert. Dieses Verfahren ist zwar für eine Herstellung von mikrokristalliner Triacetylcellulose im Labormaßstab geeignet, es erfüllt jedoch nicht die Anforderungen für eine Herstellung in technischer Größenordnung.

Perchlorsäure gibt mit organischen Stoffen äußerst explosive Gemische und unterliegt deshalb strengen Sicherheitsvorschriften und Beschränkungen im Umgang. Eine technische Herstellung von mikrokristalliner Triacetylcellulose nach diesem Verfahren unter Verwendung von Perchlorsäure ist deshalb nicht oder nur unter aufwendigen und teuren Sicherheitsvorkehrungen möglich. Um den wachsenden Bedarf an mikrokristalliner Triacetylcellulose zu befriedigen, ist es jedoch erforderlich, ein Verfahren zur Herstellung in technischem Maßstab zur Verfügung zu haben.

Es bestand somit die Aufgabe, einen geeigneten Ersatz für die in dem Verfahren gemäß dem Stand der Technik bislang als Katalysator verwendete Perchlorsäure zu finden und ein neues Verfahren für die Herstellung von mikrokristalliner Triacetylcellulose zu entwickeln, das für eine technische Durchführung geeignet ist.

Versuche, in dem bekannten Verfahren Perchlorsäure durch andere Säuren wie Schwefelsäure, p-Toluolsulfonsäure, Trifluoressigsäure, Methansulfonsäure zu ersetzen, führten zu keinem oder nur zu einem hinsichtlich Ausbeute und Qualität des Produktes völlig unbefriedigenden Ergebnis.

Überraschenderweise wurde nun gefunden, daß sich mikrokristalline Triacetylcellulose in hoher Ausbeute und hervorragender Qualität erhalten läßt, wenn man die Acetylierung von mikrokristalliner Cellulose in Gegenwart von mindestens einer Perfluoralkansulfonsäure mit 1 bis 8 C-Atomen vornimmt.

Gegenstand der Erfindung ist somit ein Verfahren zur Herstellung von mikrokristalliner Triacetylcellulose durch sauer katalysierte Acetylierung von mikrokristalliner Cellulose, wobei man diese in einem inerten Lösungsmittel suspendiert und bei leicht erhöhten Temperaturen mit Essigsäure und/oder Acetanhydrid in Gegenwart einer als Katalysator fungierenden Säure über mehrere Tage hinweg zur Reaktion bringt, dadurch gekennzeichnet, daß man als Katalysator eine Perfluoralkansulfonsäure mit 1 - 8 C-Atomen einsetzt.

Gegenstand der Erfindung ist weiterhin die Verwendung von Perfluoralkansulfonsäuren mit 1 bis 8 C-Atomen als Katalysator bei der Herstellung von mikrokristalliner Triacetylcellulose.

Erfindungsgemäß können Perfluoralkansulfonsäuren mit 1 bis 8 C-Atomen als Katalysator bei der Herstellung von mikrokristalliner Triacetylcellulose eingesetzt werden. Es können dies sein alle gerad- und verzweigtkettigen Alkansulfonsäuren mit 1 bis 8 C-Atomen, deren H-Atome im Alkylteil vollständig durch Fluor ersetzt sind. Bevorzugt sind Perfluoralkansulfonsäuren mit 1 bis 3 C-Atomen. Besonders bevorzugt hiervon ist Trifluoromethansulfonsäure.

Das erfindungsgemäße Verfahren zur Herstellung von mikrokristalliner Triacetylcellulose wird analog zu dem bekannten Verfahren durchgeführt. Nur wird bei der Acetylierung von Cellulose statt der bisher üblichen Perchlorsäure eine oder mehrere der erfindungsgemäßen Perfluoralkansulfonsäuren als Katalysator verwendet. Bevorzugt ist die Verwendung einer dieser Säuren, es können aber auch Gemische mehrerer dieser Säuren eingesetzt werden. Ihr mengenmäßiger Einsatz kann in zu Perchlorsäure äquivalenter Weise erfolgen. Da im Gegensatz zu Perchlorsäure Perfluoralkansulfonsäuren keine oxidierenden Eigenschaften aufweisen, ist ihr mengenmäßiger Einsatz in der Reaktion weniger kritisch. Zweckmäßig erweisen sich Zugaben von 1 bis 10 Gewichtsprozent, vorzugsweise 2 bis 5 Gewichtsprozent, bezogen auf die Menge an Cellulose.

Zur Herstellung von mikrokristalliner Triacetylcellulose nach dem Verfahren gemäß der Erfindung wird mikrokristalline Cellulose in handelsüblicher Qualität in einem gegenüber den Reaktionspartnern inerten Lösungsmittel wie etwa Benzol, Toluol, Xylol oder einer im entsprechenden Temperaturbereich siedenden Paraffinkohlenwasserstofffraktion suspendiert und bei schonenden Bedingungen, d. h. bei leicht erhöhten Temperaturen bis maximal 50 °C, mit geeigneten Acetylierungsmitteln wie Essigsäure und/oder Acetanhydrid und erfindungsgemäß in Gegenwart mindestens einer Perfluoralkansulfonsäure als Katalysator über mehrere Tage hinweg zur Reaktion gebracht. Nach Abschluß der Acetylierung wird die erhaltene Triacetylcellulose in üblicher Weise vom Reaktionsmedium abgetrennt und gereinigt, wobei es dann in pulvrig-körniger, für die meisten Zwecke schon verwendbarer Form vorliegt.

Neben dem Ersatz der gefährlichen Perchlorsäure zeigt das erfindungsgemäße Verfahren gegenüber dem bekannten überraschenderweise noch einige weitere Vorteile.

Bei der erfindungsgemäßen Acetylierung mit Perfluoralkansulfonsäuren als Katalysator tritt keine Agglomeration der Triacetylcelluloseteilchen und dadurch hervorgerufene Verklumpung und Verklebung des Produkts auf. Dadurch läßt sich das Produkt wesentlich leichter und unter erheblicher Zeiteinsparung durch Absaugen vom Reaktionsgemisch abtrennen und durch Waschen und Absaugen reinigen.

Darüberhinaus liegt das Produkt schon in einem für chromatographische Zwecke günstigen Korngrößenbereich von etwa 5 bis 50 μm vor, so daß es an sich schon als chromatographisches Sorbens verwendet oder nur durch Klassieren nach üblichen Methoden in entsprechende Korngrößenfraktionen getrennt werden kann.

Demgegenüber fällt das Produkt bei dem bekannten Verfahren in stark agglomerierter bis verklumpter Form an, so daß die Abtrennung und Reinigung schwierig und zeitaufwendig ist und das Produkt durch Vermahlen und anschließendes Klassieren in eine für chromatographische Zwecke verwendbare Form gebracht werden muß.

Weiterhin ist durch das neue Verfahren eine deutliche Ausbeuteverbesserung von etwa 60 bis 70 % nach den herkömmlichen Verfahren auf durchschnittlich 80 bis 85 % zu verzeichnen. Darüberhinaus fällt die mikrokristalline Triacetylcellulose als farbloses Produkt, also mit höherer Reinheit an, während das Produkt nach dem bekannten Verfahren, bedingt durch die oxidierende Wirkung der Perchlorsäure, einen beigen bis bräunlichen Farbton aufweist.

Die nach dem erfindungsgemäßen Verfahren hergestellte mikrokristalline Triacetylcellulose kann in an sich bekannter Weise als Sorbens für chromatographische Zwecke, insbesondere für chromatographische Racematspaltungen, verwendet werden. So kann sie alleine oder zusammen mit anderen chromatographischen Sorbentien und gegebenenfalls in der Technologie üblichen Hilfsstoffen zu Sorbensschichten in der Schichtchromatographie, beispielsweise auf Dünnschicht- oder Dickschichtchromatographieplatten bzw. -folien verarbeitet werden oder als Säulenfüllmaterial für die Säulenchromatographie wie auch für die Hochdruckflüssigchromatographie verwendet werden. Dabei steht die nach dem erfindungsgemäßen Verfahren hergestellte mikrokristalline Triacetylcellulose der nach dem herkömmlichen hergestellten in keiner Weise nach, sondern liefert im Gegenteil aufgrund ihrer höheren Reinheit bei chromatographischen Trennungen bessere und reproduzierbarere Trennergebnisse.

Beispiel

Eine Suspension von 100 g handelsüblicher mikrokristalliner Cellulose in 1,5 l Toluol wird bei Raumtemperatur und unter Rühren mit 400 ml Eisessig und 2,65 ml Trifluormethansulfonsäure versetzt. Danach tropft man 400 ml Essigsäureanhydrid zu und rührt das Reaktionsgemisch 3 Tage bei ca. 35 °C. Nach Beendigung der Reaktion wird der Suspension 1 l Methanol zugesetzt und das Produkt abgesaugt. Dieses wird dann mehrmals mit Methanol aufgeschlämmt und abgesaugt und mit Petrolether nachgewaschen. Nach Trocknen bei Raumtemperatur an der Luft erhält man 146 g (82 % der theoretischen Ausbeute bezogen auf Cellulose) an mikrokristalliner Triacetylcellulose in Form eines farblosen, pulvrig-körnigen Produktes.

## Patentansprüche

1. Verfahren zur Herstellung von mikrokristalliner Triacetylcellulose durch saure katalysierte Acetylierung von mikrokristalliner Cellulose, wobei man diese in einem inerten Lösungsmittel suspendiert und bei leicht erhöhten Temperaturen mit Essigsäure und/oder Acetanhydrid in Gegenwart einer als Katalysator fungierenden Säure über mehrere Tage hinweg zur Reaktion bringt, dadurch gekennzeichnet, daß man als Katalysator eine Perfluoralkansulfonsäure mit 1 - 8 C-Atomen einsetzt.

2. Verwendung von Perfluoralkansulfonsäuren mit 1-8 C-Atomen als Katalysator bei der Herstellung von mikrokristalliner Triacetylcellulose.

## Claims

1. Process for the preparation of microcrystalline triacetylcellulose by acid-catalysed acetylation of microcrystalline cellulose, wherein the latter is suspended an inert solvent and is reacted for several days at slightly elevated temperatures with acetic acid and/or acetic anhydride in the presence of an acid acting as a catalyst, characterized in that a perfluoroalkanesulfonic acid with 1 to 8 C atoms is used as the catalyst.

2. Use of perfluoroalkanesulfonic acids with 1-8 C atoms as the catalyst in the preparation of microcrystalline triacetylcellulose.

**Revendications**

1. Procédé de production de triacétylcellulose microcristalline par acétylation catalysée par les acides de cellulose microcristalline, qui est mise en suspension dans un solvant inerte et qui est mise à réagir pendant plusieurs jours à température légèrement élevée avec de l'acide acétique et/ou de l'anhydride acétique en présence d'un acide jouant le rôle de catalyseur, caractérisé en ce qu'on utilise comme catalyseur un acide perfluoroalcanesulfonique ayant de 1 à 8 atomes de carbone.

2. Utilisation d'acides perfluoroalcanesulfoniques ayant de 1 à 8 atomes de carbone comme catalyseurs pour la production de triacétylcellulose microcristalline.